# EUROPEAN PATENT SPECIFICATION

(11) **EP 3 904 193 B1**
(45) Date of publication and mention of the grant of the patent: **28.08.2024**
(21) Application number: 21167865.1
(22) Date of filing: 12.04.2021
(51) Int. Cl.: B62K 25/28, B62M 9/125, B62K 25/30

(54) **DEVICE FOR THE SELECTIVE POSITIONING OF THE PIVOT OF A WHEEL**
VORRICHTUNG ZUR SELEKTIVEN POSITIONIERUNG DES DREHPUNKTS EINES RADES
DISPOSITIF DE POSITIONNEMENT SÉLECTIF DE PIVOT D'UNE ROUE

(30) Priority: 30.04.2020 IT 202000009499
(43) Date of publication of application: 03.11.2021
(73) Proprietor: Fantic Motor S.p.A., 31030 Casier, Frazione Dosson TV (IT)
(72) Inventor: ROMAN, Mariano, 30033 NOALE VE (IT); FIDELFATTI, Enrico, 36043 CAMISANO VICENTINO VI (IT)
(74) Representative: Modiano, Micaela Nadia

(56) References cited:
- DE-U1- 20 213 160
- DE-U1- 202009 015 815
- FR-A1- 3 046 400
- FR-B1- 3 046 400
- US-A1- 2014 054 873
- US-A1- 2019 322 333
- US-B2- 10 472 019

## Description

The present invention relates to a device for the selective positioning of the pivot of a wheel, particularly for bicycles, particularly but not exclusively of the pedal-assist type, for example for city use.

Bikes or bicycles of the known type are usually constituted by a frame composed of various tubular elements so as to obtain a structure composed of a top tube connected at one end to a head tube and at the other end to a rear vertical tube and to a saddle post.

Two oblique rear chainstays or dropouts are usually connected at the connection of the saddle post and/or of the top tube and/or of the vertical tube, while horizontal rear chainstays or dropouts are connected at the connection of the downtube and of the vertical tube, are connected at their ends to the two oblique rear chainstays or dropouts and have a seat for an axle of a wheel.

Moreover, a brake caliper can be connected to the chainstays or dropouts.

In the bicycle sector, wheel fixing systems are known which are of the type comprising a quick coupling which is fixed to the ends of the hub of the wheel, said hub ends being insertable at adapted seats provided at the ends of the chainstays or dropouts.

Usually, the dimensions and shape of the chainstays or dropouts are designed to receive a wheel axle or wheels of given dimensions, various choices for example of wheels from 27.5" to 29", being commercially available, these dimensions being correlated to the diameter of the rim, which in the case of 29" wheels is 622 mm or 28 inches.

A bicycle of the known type, for example designed for 27.5" wheels, is not compatible with 29" wheels.

Vice versa, if a bicycle is designed for 29" wheels it can mount 27.5" wheels, but if the wheel axis is not modified the dynamics is not optimized.

As a partial solution to this drawback, FR3046400B1 is known which discloses a solution related to a rear stay of a bicycle which comprises a frame and a rear dropout which supports the axle of the hub of a wheel and one end of which comprises, on the external surface, a seat for first adapter that is shaped complementarily, the adapter having an eccentric threaded hole adapted to receive the thread of the axle of the hub of the rear wheel so that the position of the threaded hole can be modified by positioning the first adapter in one direction or in the other direction in the seat in order to adapt the position of the hole as a function of the height of the side wall of the wheel.

Two screws are provided which are adapted to be positioned on adapted holes provided in the seat of the first adapter in order to allow the fixing of the latter to the dropout.

There is a second adapter provided with an eccentric through hole, also capable of receiving the axle of the hub of the wheel, provided on the other dropout of the rear stay.

The eccentricity of the threaded hole of the first adapter corresponds to the eccentricity of the through hole provided in the second adapter.

Two adapted screws are also present in order to allow the fixing of the second adapter to the corresponding dropout.

There is also a derailleur hook which is also locked to the dropout by means of the screws for fixing the adapter to the dropout.

This solution allows, when wheels of different diameter are changed, to remove the first wheel, then invert the adapters, mount the second wheel having different dimensions and lock the two adapters to the dropouts.

However, even this solution has drawbacks; the presence of the threaded hole on the first adapter in fact increases the time required to perform wheel changing, as well as the need to fix, by means of screws, the first and second adapters to the respective dropouts, which must be disassembled beforehand in order to be able to remove the wheel that one wishes to replace with one having a different diameter.

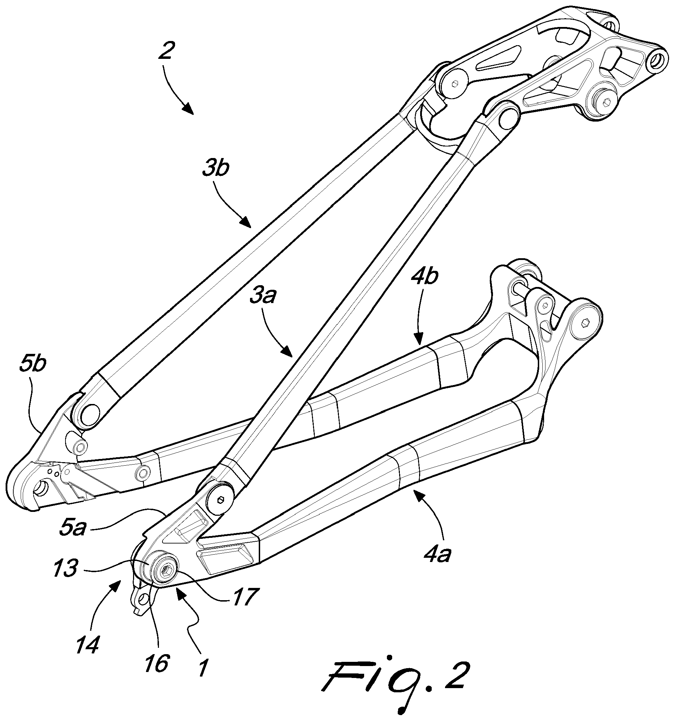

Furthermore, the displacement of the two wheel axes is parallel to the ground; therefore, the surface that locks the wheel is parallel to the ground (see Figure 2) and if, however, the wheel axes were not parallel to the ground said surface would have to be inclined and in this situation it would not be a true "stroke limiter" during the insertion of the hub, since the hub would slide along the inclined surface without stopping in the correct position.

US 2019/0322333 is also known which discloses a derailleur hook in which there is a brake element configured for installation on an axial internal side of a portion of an associated bracket of a bicycle frame in order to install a rear gearshift mechanism of a derailleur system on the bicycle frame.

The brake element can include a first portion, which has an opening or an opening assigned to the axis and which, in the installed state, is subject to a fastening force that acts between the rear bracket portion.

The brake element can also include a second portion which has an installation opening that is radially offset with respect to the opening or opening in the installed state with respect to the axis and to which it is possible to fix one end of a coupling of a base element of the mechanism of the rear gearshift.

In this solution, the connection of the derailleur hook to the chainstays occurs by means of a rotatable coupling between the derailleur hook itself and the through pivot of the wheel.

The document US 10,472,019 B2 discloses the features of the preamble of claim 1.

The aim of the present invention is therefore to overcome the described technical problems, eliminating the drawbacks of the cited background art and thus devising a device for the positioning of a pivot of a wheel that allows to achieve rapidly and simply the installation on the rear stay of a bicycle of wheels of a different diameter despite the presence of a derailleur hook.

Within this aim, an object of the invention is to allow the cyclist to be able to modify rapidly and simply in particular the position of the axis of the wheel in passing from 27.5" to 29".

Another object of the invention is to devise a device for the selective positioning of the axis of a wheel allows quick and easy wheel changing in a bicycle and at the same time is provided in a small number of parts, is mechanically and constructively simple and strong, has low manufacturing and assembly costs, and does not require to be provided with specific fixing holes on the chainstays or dropouts.

Another object of the invention is to devise a device that has high reliability and safety and at the same time has a small overall weight.

Another object is to provide a device that can be disassembled and reassembled rapidly and easily even by personnel that is not particularly trained.

Another object is to provide a device that combines with the preceding characteristics that of being used in a frame of a bicycle with a derailleur hook applied thereto that is simple, has low costs for its provision and the application of which allows, in case of impact of the derailleur against an object during racing, to rotate through a certain free arc and thus avoid breakage.

The mentioned aim and objects, as well as others which will become better apparent hereinafter, are achieved by a device for the selective positioning of the pivot of a wheel of a bicycle comprising a frame composed of a rear stay provided with a first pair of first oblique rear chainstays which are each connected, respectively by means of a triangular support, to a second pair of two second horizontal rear chainstays, a derailleur hook being associable with said first chainstays and second chainstays, characterized in that first external seats and second internal seats are provided at the first internal surface and at the first external surface of said support for the axial and removable positioning respectively of a first external adapter and of a second internal adapter and have respectively a second hole and a third hole, both of which are smooth and are adapted to determine two different axial arrangements of said derailleur hook and consequently of said pivot of said wheel with respect to said two first and second chainstays and are adapted to keep said derailleur hook locked in clockwise rotation and free to rotate counterclockwise only through a chosen arc.

Further characteristics and advantages of the invention will become better apparent from the detailed description of a particular but not exclusive embodiment, illustrated by way of non-limiting example in the accompanying drawings, wherein:

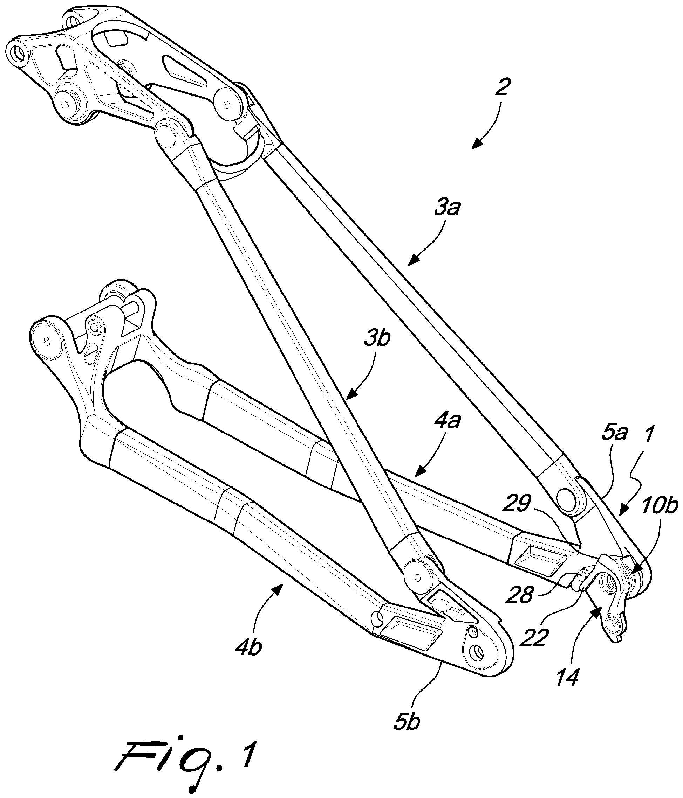

Figure 1 is a first lateral perspective view of an example of a frame for bicycles with the device according to the invention applied in the condition for use of a smaller-diameter wheel;
Figure 2 is a second lateral perspective view, similar to the preceding one;
Figure 3 is a first internal lateral perspective view of the terminal part of the frame with which the device of the invention is associated in the condition for use of a smaller-diameter wheel;
Figure 4 is a first lateral perspective view of the terminal part of the frame which the device of the invention is associated in the condition for use of a smaller-diameter wheel;

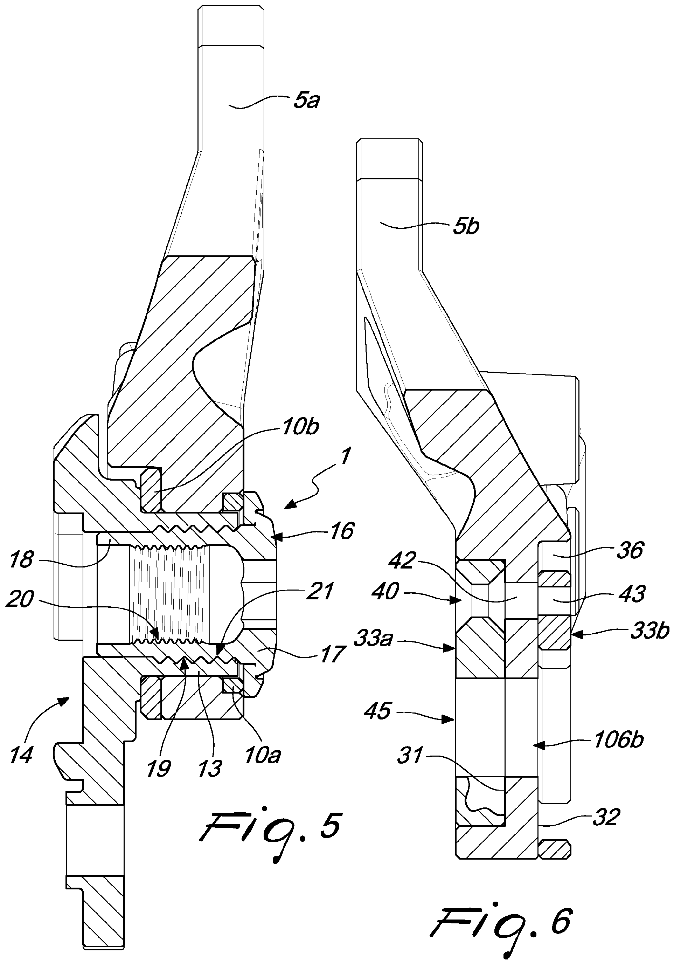

Figure 5 is a sectional view of the device of the invention in the condition for use of a smaller-diameter wheel;
Figure 6 is a sectional view, taken along the plane VI-VI of Figure 4;
Figure 7 is a lateral perspective view of the device applied in the condition for use of a larger-diameter wheel;
Figure 8 is an exploded view of the device according to the preceding figure;
Figure 9 is a second internal lateral perspective view of the device in the condition for use of a smaller-diameter wheel;
Figure 10 is an exploded view of the device;

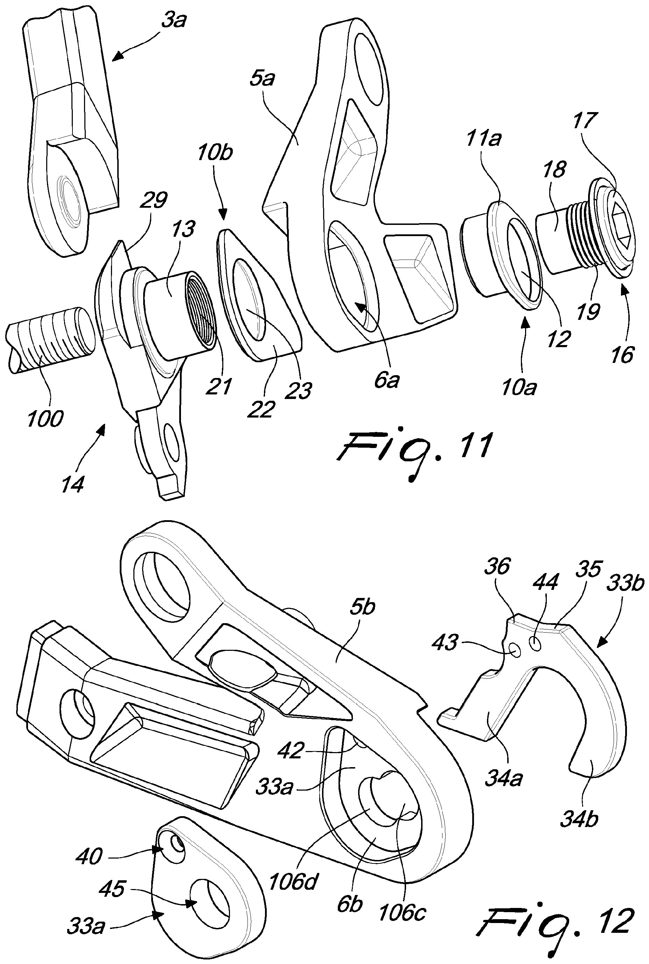

Figure 11 is an exploded view of various components;
Figure 12 is an exploded view of the components according to Figure 4;

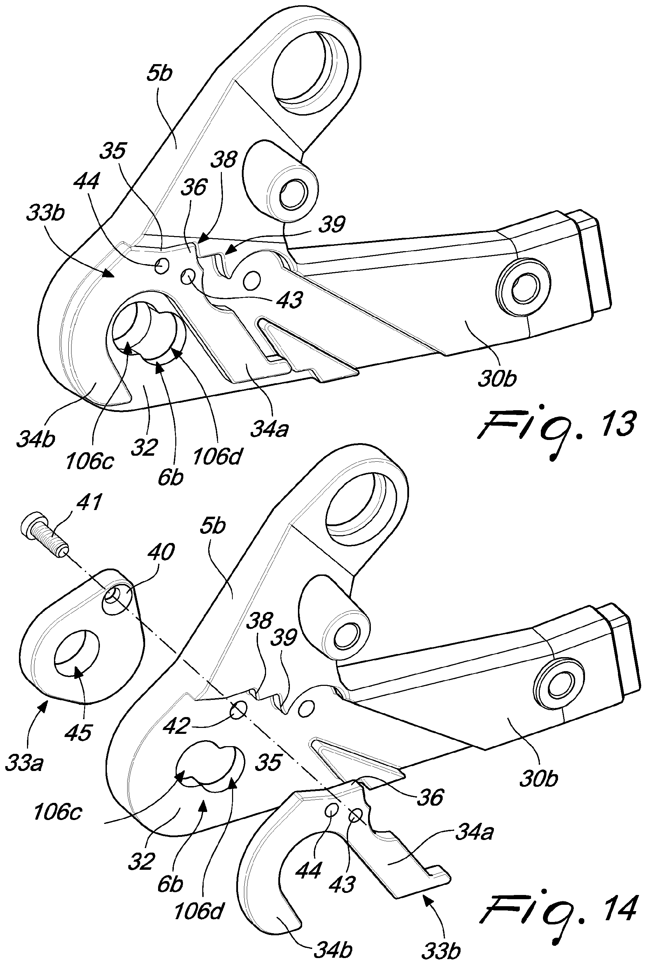

Figures 13 and 14 are a perspective view and an exploded view of the third external adapters and of the fourth internal adapters in the condition for use of a larger-diameter wheel;

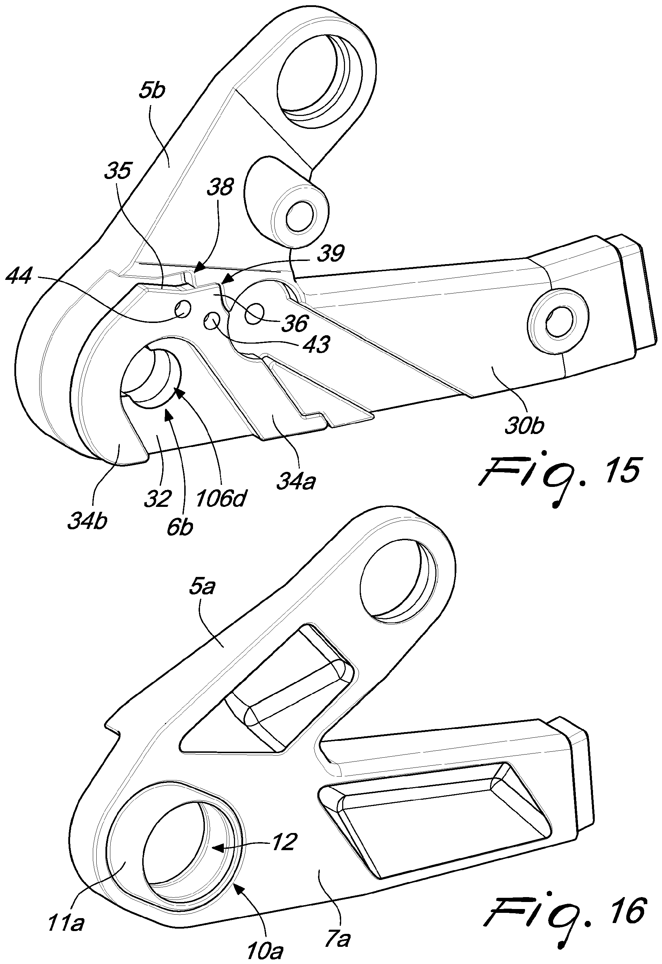

Figures 15, 16 and 17 are views of the third external adapters and of the fourth internal adapters in the condition for use of a smaller-diameter wheel.

In the embodiments that follow, individual characteristics, given in relation to specific examples, may actually be interchanged with other different characteristics that exist in other embodiments.

With reference to the figures, the reference numeral 1 designates a device for the selective positioning of the pivot 100 of a wheel (not shown) of a bicycle (not shown), of the electric type or not, comprising a frame which is constituted by a rear stay 2 which comprises two first oblique rear chainstays or dropouts 3a, 3b (3a being also referenced as right and 3b as left) and two second horizontal rear chainstays or dropouts 4a, 4b (4a being also referenced as right and 4b as left), which are mutually connected at the ends by a triangular support 5a, 5b.

Such first and second chainstays or dropouts 3a, 3b, 4a, 4b have, at the corner of the triangular supports 5a (also referenced as right), 5b (also referenced as left), a first hole 6a, 6b which has a figure-of-eight shape; the first hole 6a forms two circles 106a, 106b, which are contiguous, mutually identical and partially mutually intersect, both have smooth internal surfaces, and in turn determine two different conditions for the arrangement of a derailleur hook 14 (described hereinafter) and consequently of the pivot 100 of the wheel.

A first external seat 8 and a second internal seat 9 are provided at the first external surface 7a and at the first internal surface 7b of said support 5a, which is connected to the first right chainstay 3a and to the second right chainstay 4a, for the axial and removable positioning respectively of a first external adapter 10a and of a second internal adapter 10b.

The first external adapter 10a has a first head 11a having a substantially elliptical plan shape which is provided with a second hole 12, which is not threaded and eccentric, with a diameter that is substantially equal to the diameter of the sleeve 13 of the derailleur hook 14 of the known type, which can be traced back for example to US 2019/0322333 or to the UDH model of the company SRAM DEUTSCHLAND GmbH, such second hole 12 having a diameter that is substantially equal to the diameter of one of the circles 106a and 106b.

A first stem 15 protrudes on the side of the first head 11a that is opposite the side on which the second hole 12 is provided, is therefore axially offset with respect to the second hole 12 and is shaped so that it can be inserted selectively in one of the two circles 106a and 106b following a 180° rotation of said first external adapter 10a.

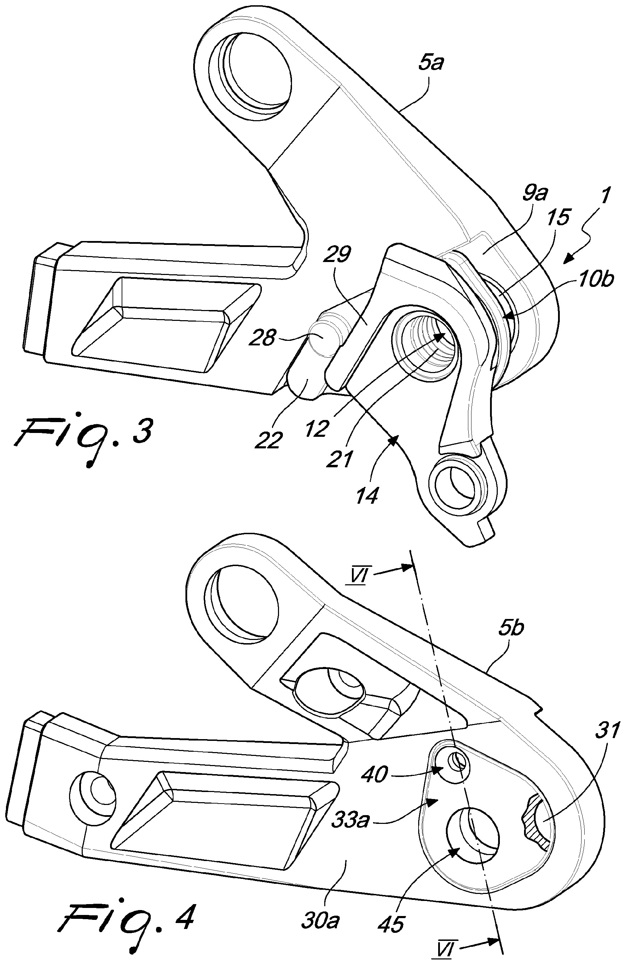

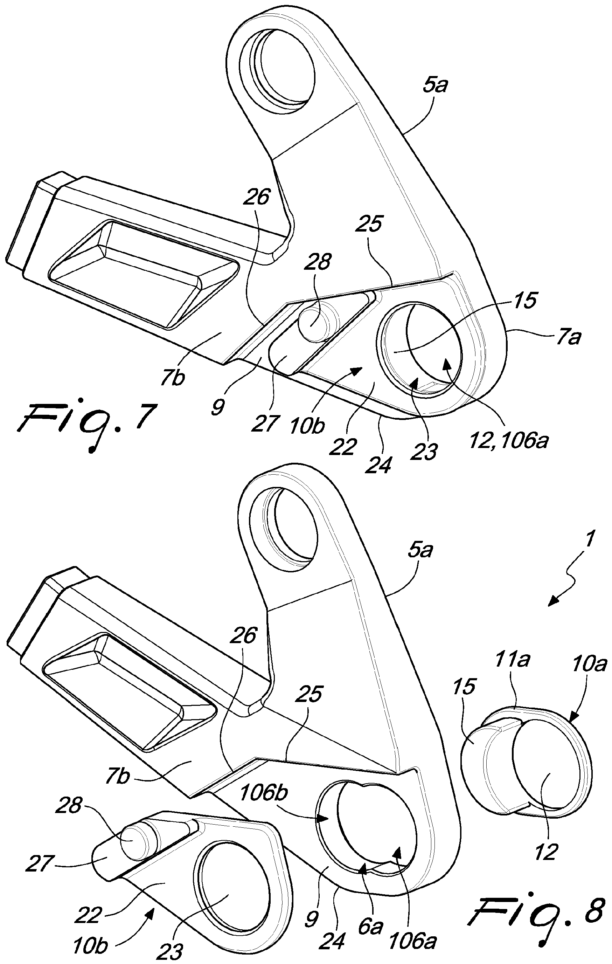

One therefore reaches two possible configurations, shown for example in Figures 3 and 7, in which it is possible to determine two different axial arrangements of the derailleur hook 14 and consequently of said pivot 100 of said wheel with respect to said support 5a of said first chainstay 3a.

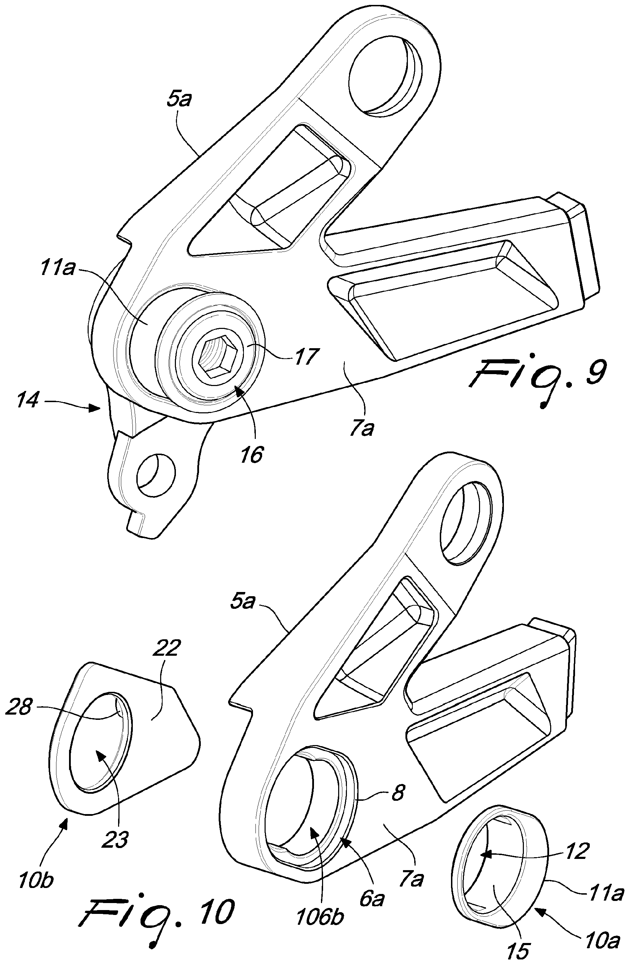

When the first stem 15 is inserted in the circle 106a one has the smaller-diameter wheel condition (see for example Figure 9).

When the first stem 15 is inserted in the circle 106b one has the larger-diameter wheel condition (see for example Figure 7).

A cap or cover 16 also contributes to constitute the derailleur hook 14 and comprises a second head 17, which has a diameter equal to or greater than that of the second hole 12, from which a second stem 18 protrudes axially which has an external thread 19 that is threaded complementarily to the second internal thread 21 of the sleeve 13 and a first internal thread 20 which is threaded complementarily to the terminal end of the pivot 100 of the wheel.

The second internal seat 9 has a substantially scalene trapezoid shape with a longer parallel side 24 which follows the shape of the lower side of the support 5a, a shorter parallel side 25 which has, from the corner of the support 5a toward the second chainstay 4a, a given inclination toward the underlying longer parallel side 24 and an oblique side 26 for connection between the longer parallel side 24 and the shorter parallel side 25 that is directed toward the second chainstay 4a.

The second internal adapter 10b is constituted by a plate 22 which is shaped complementarily to the second internal seat 9, is substantially planar and is provided with a third hole 23, which is not threaded and is eccentric and has a diameter that is substantially equal to the diameter of the sleeve 13 and to the diameter of one of the circles 106a and 106b.

A raised portion 27 shaped like a parallelepiped furthermore protrudes from the plate 22, parallel to the oblique side 26 and so as to partially affect the shorter parallel side 25, and in turn a pin 28 protrudes from the raised portion substantially adjacent to the connection between the oblique side 26 and the shorter parallel side 25 and is adapted to keep the derailleur hook 14, once mounted, locked in the direction of a clockwise rotation and free to rotate counterclockwise only through a chosen arc.

When using for example the model UDH derailleur of the company SRAM DEUTSCHLAND GmbH, the pin 28 in fact must act as abutment for the front arm 29 of the derailleur hook 14 if the latter is imparted a counterclockwise rotation, the pin 28 being arranged at a given, chosen and precise distance from the axis of the pivot 100 of the chosen wheel.

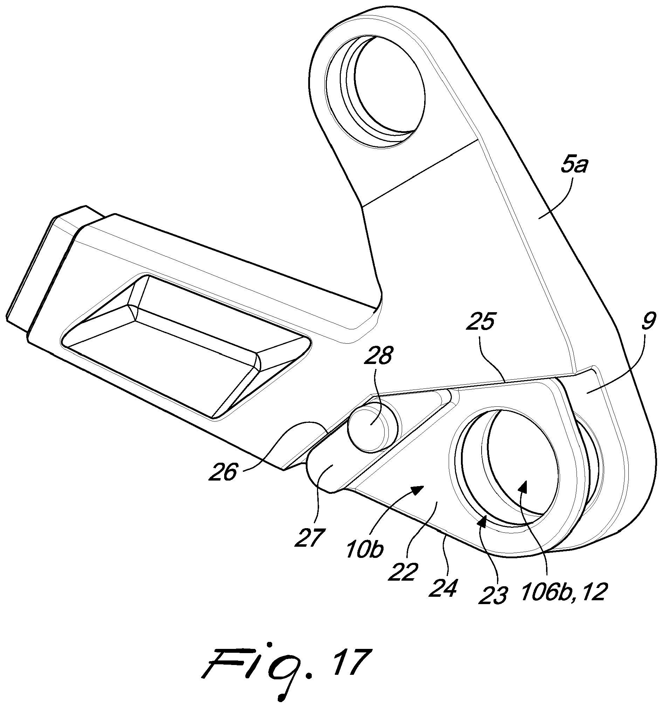

When the first external adapter 10a is rotated through 180° (see Figures 7 and 17), the second internal adapter 10b is arranged differently with respect to the first internal seat 9 and at the same time the pin 28 moves, both axially and radially with respect to the first hole 6a, so as to maintain a precise distance from the axis of the pivot 100 of the wheel and allow the abutment therewith of the front arm 29 of the derailleur hook 14 upon a counterclockwise rotation.

This second internal adapter 10b therefore moves together with the axis of the pivot 100 of the wheel so as to always have the front arm 29 of the derailleur hook 14 at the correct distance in order to prevent a counterclockwise rotation.

A third external seat 31 and a fourth internal seat 32 for the axial and removable positioning respectively of a third external adapter 33a and of a fourth internal adapter 33b are provided at the second external surface 30a and at the second internal surface 30b of the support 5b, connected to the first left chainstay 3b and to the second left chainstay 4b.

The fourth internal adapter 33b has a substantially C-shaped configuration so as to form, in the external perimetric connection region of wings 34a, 34b, a substantially planar portion 35 which is connected, in the direction of the second chainstay 4b, by a tooth 36 that protrudes toward the first chainstay 3b.

The fourth internal seat 32 accommodates inside it the fourth internal adapter 33b and has, in the direction of the first chainstay 3b, a fifth seat 38 that is adapted to accommodate temporarily the complementarily shaped tooth 36; a sixth seat 39 is present and adjacent to the fifth seat 38, is similar to the preceding one and allows the selective positioning of the tooth 36 which makes the fourth internal adapter 33b translate in the direction of the second chainstay 4b.

An interspace is formed between the wings 34a, 34b of the fourth internal adapter 33b and allows, regardless of the position assumed by the fourth internal adapter 33b, to not occlude the first hole 6b which also has a figure-of-eight shape so as to form two contiguous and partially intersecting circles 106c, 106d, which are mutually identical and both have smooth internal surfaces, which in turn determine two different conditions for the positioning of the pivot 100 of the wheel.

The third adapter 33a has a triangular shape with rounded corners and can be inserted detachably in the third external seat 31.

One corner of the third adapter 33a is directed toward the first chainstay 3b and a fourth hole 40 is provided thereon and accommodates a screw 41 for its temporary insertion at a fifth through hole 42 provided in the fourth internal seat 32 in a region below the fifth seat 38 for the tooth 36.

The screw 41 is screwed onto a complementarily threaded sixth hole 43 provided in the fourth internal adapter 33b in a region below the fifth seat 38 when the tooth 36 is inserted in said fifth seat 38.

By moving the fourth internal adapter 33b so that the tooth 36 is arranged in the sixth seat 39, the sixth hole 43 also consequently moves at the same time; the screw 41 is thus fixed to a complementarily threaded seventh hole 44 provided in a region below the portion 35.

The third external adapter 33a is provided with an eighth hole 45, which is axially offset with respect to the intersection point of the heights, which is arranged either in axial alignment with the circle 106c or in axial alignment with the circle 106d.

The circles 106a, 106b and 106c, 106d are in fact respectively mutually axially aligned so that once the positioning of the first external adapter 10a and of the second internal adapter 10b has been defined, the third external adapter 33a is also positioned so that the pivot 100 of the wheel is in axial alignment either with the circles 106a, 106c or with the circles 106b, 106d.

It is thus possible to obtain two possible configurations, shown for example in Figures 3 and 7, in which it is possible to determine two different axial arrangements of the pivot 100 of said wheel with respect to the supports 5a, 5b of said first chainstays 3a, 3b and second chainstays 4a, 4b.

It has thus been found that the invention has achieved the intended aim and objects, a device having been obtained which allows to achieve, rapidly and simply, the installation on the rear stay of a bicycle of wheels having a different diameter despite the presence of a derailleur hook associated with the rear stay.

The changing of the wheel to be mounted, for example passing from 27.5" wheels to 29" wheels, can be obtained by the cyclist without particular tools or instruments and rapidly and simply.

Furthermore, the first external adapter 10a and the second internal adapter 10b have said second hole 12 and said third hole 23 which are not threaded, thus allowing the free passage of the pivot 100 of the wheel, the pivot being fixed to the derailleur hook 14 by means of the cap or cover 16.

This entails the absence of threaded seats in the first external adapter and in the second internal adapter or on the frame, since they are closed in a pack-like configuration by means of the derailleur hook 14.

This leads to great simplicity in the provision of the frame, with a consequent lower cost in the provision of said frame, greater speed and simplicity in changing from a wheel, passing for example from 27.5" to 29", since there are no screws for the fixing of the first external adapter 10a and of the second internal adapter 10b.

Furthermore, the device is compatible with a derailleur hook of the known type, even if it is of the UDH model of the company SRAM DEUTSCHLAND GmbH, which requires an abutment in the internal part of the frame, at a very precise distance with respect to the wheel axis.

By modifying in fact the position of the axis of the pivot 100 of the wheel it is in fact necessary to also modify this abutment and in the present device there are the first external adapter 10a and the second internal adapter 10b which allow to keep the derailleur hook 14 locked in rotation so that its axis and the axis of the wheel coincide.

The presence of the third external adapter 33a and of the fourth internal adapter 33b also allow to determine two different axial positions of the pivot 100 of the wheel with respect to the two first and second chainstays 3a, 3b, 4a, 4b, requiring a single screw for their mutual fixing.

Furthermore, the rotatable application of the derailleur allows, in case of impact of the derailleur against an object during the race, to rotate through a certain free arc and thus avoid breakage.

Furthermore, it is noted that even if wheel axes that are not at the same height from the ground should occur, it would be sufficient to move the fourth internal adapter 33b, which has the function of creating an abutment for the hub of the wheel during the mounting of the wheel in the frame, to always achieve the correct guiding for the insertion of the wheel hub until the correct position is reached.

The materials used, as well as the dimensions that constitute the individual components of the invention, may of course be more pertinent according to the specific requirements.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for the selective positioning of the pivot (100) of a wheel of a bicycle comprising a frame composed of a rear stay (2) provided with a first pair of first oblique rear chainstays (3a, 3b) which are each connected, respectively by means of a triangular support (5a, 5b), to a second pair of second horizontal rear chainstays (4a, 4b), a derailleur hook (14) being associable with one of said first chainstays (3a) and one of said second chainstays (4a) on a first side of the bicycle frame, wherein first external seats (8) and second internal seats (9) are provided at the first internal surface (7b) and at the first external surface (7a) of the triangular support (5a) on said first side of the frame for the axial and removable positioning respectively of a first external adapter (10a) and of a second internal adapter (10b), wherein said first external adapter (10a) and said second internal adapter (10b) have respectively a second hole (12) and a third hole (23), both of which are smooth and are adapted to determine two different axial arrangements of said derailleur hook (14) and consequently of said pivot (100) of said wheel with respect to said two first and second chainstays (3a, 4a),
**characterised in that** said device is adapted to keep said derailleur hook (14) locked in clockwise rotation and free to rotate counterclockwise only through a chosen arc.

2. The device (1) according to claim 1, **characterized in that** the one of said second chainstays (4b) on a second side of the bicycle frame opposite to said first side (4b) is connected by a respective triangular support (5b) at a second internal surface (30b) and at a second external surface (30a) of which there are third external seats (31) and fourth internal seats (32) for the removable positioning, respectively, of a third external adapter (33b) and of a fourth internal adapter (33a), which are adapted to determine two different axial arrangements of said wheel with respect to said two first and second chainstays (3a, 3b, 4a, 4b).

3. The device (1) according to one or more of the preceding claims, **characterized in that** said first and second chainstays or dropouts (3a, 3b, 4a, 4b) have, at the vertex of said triangular supports (5a, 5b), a first hole (6a, 6b) which has a figure-of-eight shape, said first hole (6a, 6b) forming two circles (106a, 106b, 106c, 106d) which are contiguous, mutually identical and partially intersect each other and both have smooth internal surfaces, which in turn determine two different conditions for the arrangement of said derailleur hook (14) and of said pivot (100) of said wheel.

4. The device (1) according to claim 3, **characterized in that** said first external adapter (10a) has a first head (11a), having a substantially elliptical plan shape, provided with a second hole (12), which is not threaded and eccentric and has a diameter that is substantially equal to that of the sleeve (13) of said derailleur hook (14), said second hole (12) having a diameter that is substantially equal to the diameter of one of said circles (106a, 106b) on said first side of the bicycle frame, on the side of said first head (11a) that is opposite the one on which said second hole (12) is provided there protruding a first stem (15), which is therefore axially offset with respect to said second hole (12), which is shaped so that it can be inserted selectively in one of said two circles (106a, 106b) on said first side of the bicycle frame following a 180° rotation of said first external adapter (10a) so as to define two possible configurations in which it is possible to determine two different axial arrangements of said pivot (100) of said wheel with respect to said support (5a) of said first chainstay (3a) on said first side of the bicycle frame.

5. The device (1) according to one or more of the preceding claims, **characterized in that** said second internal seat (9) has a substantially scalene trapezoid shape with a longer parallel side (24) which follows the shape of the lower side of said support (5a) on said first side of the bicycle frame, a shorter parallel side (25) which has,
from the vertex of said support (5a) on said first side of the bicycle frame toward said second chainstay (4a) on said first side of the bicycle frame, a given inclination towards the underlying longer parallel side (24), and an oblique side (26) for connection between said longer parallel side (24) and said shorter parallel side (25) that is directed in the direction of said second chainstay (4a) on said first side of the bicycle frame.

6. The device (1) according to one or more of the claims 3 to 4 and claim 5, **characterized in that** said second internal adapter (10b) is constituted by a plate (22), which is shaped complementarily to said second internal seat (9), has a substantially flat shape and is provided with said third hole (23), which is not threaded and is eccentric and has a diameter that is substantially equal to the diameter of said sleeve (13) and to the diameter of one of said circles (106a, 106b) on said first side of the bicycle frame, a raised portion (27) shaped like a parallelepiped protruding from said plate (22) parallel to said oblique side (26) and so as to partially affect said shorter parallel side (25), a pin (28) protruding in turn from said raised portion substantially adjacent to the connection between said oblique side (26) and said shorter parallel side (25), said pin being adapted to keep said derailleur hook (14), once fitted, locked in the direction of a clockwise rotation and free to rotate in a counterclockwise direction only through a chosen arc.

7. The device (1) according to claim 6, **characterized in that** upon a 180° rotation of said first external adapter (10a) said second internal adapter (10b) is arranged differently with respect to said first internal seat (9) and at the same time said pin (28) moves, both axially and radially to said first hole (6a) on said first side of the bicycle frame, so as to maintain a precise distance from the axis of said pivot (100) of the wheel and allow the abutment therewith of a front arm (29) of said derailleur hook (14) upon a counterclockwise rotation.

8. The device (1) according to claim 2, **characterized in that** at the second external surface (30a) and at the second internal surface (30b) of said support (5b) on said second side of the bicycle frame, connected to said first and second chainstays (3b, 4b) on said second side of the bicycle frame, there are said third external seat (31) and said fourth internal seat (32) for the axial and removable positioning respectively of said third external adapter (33a) and of said fourth internal adapter (33b), said fourth internal adapter (33b) being substantially C-shaped so as to form, in the external perimetric region for connection of wings (34a, 34b), a substantially planar portion (35) which is connected, in the direction of said second chainstay (4b) on said second side of the bicycle frame, by a tooth (36) that protrudes toward said first chainstay (3b) on said second side of the bicycle frame, said fourth internal seat (32) accommodating inside it said fourth internal adapter (33b) and having, in the direction of said first chainstay (3b) on said second side of the bicycle frame, a fifth seat (38) that is adapted to accommodate temporarily said complementarily shaped tooth (36), adjacent to said fifth seat (38) there being a sixth seat (39), which is similar to the preceding one and is adapted to allow the selective positioning of said tooth (36) which makes said fourth internal adapter (33b) translate in the direction of said second chainstay (4b) on said second side of the bicycle frame.

9. The device (1) according to claim 2 and claim 3 and claim 8, **characterized in that** an interspace is formed between said wings (34a, 34b) of said fourth internal adapter (33b) and allows, whatever the position assumed by said fourth internal adapter (33b), to avoid occluding said first hole (6b) on said second side of the bicycle frame, which also has a figure-of-eight shape so as to form two contiguous and partially intersecting circles (106c, 106d), which are mutually identical and both have smooth internal surfaces, which in turn determine two different conditions for the positioning of said pivot (100).

10. The device (1) according to claims 2 and 8, or claim 9, **characterized in that** said third adapter (33a) has a triangular shape with rounded corners and can be inserted detachably in said third external seat (31), one vertex of said third adapter (33a) being directed toward said first chainstay (3b) on said second side of the bicycle frame, a fourth hole (40) being provided thereon and accommodating a screw (41) for its temporary insertion at a fifth through non-threaded hole (42) provided in said fourth internal seat (32) in a region below said fifth seat (38) for said tooth (36), said screw (41) being screwed onto a complementarily threaded sixth hole (43) provided in said fourth internal adapter (33b) in a region that lies below said fifth seat (38) when said tooth (36) is inserted in said fifth seat (38).

11. The device (1) according to claim 10, **characterized in that** a movement of said fourth internal adapter (33b) so that said tooth (36) is arranged in said sixth seat (39) causes the simultaneous movement also of said sixth hole (43), said screw (41) being fixed consequently to a complementarily threaded seventh hole (44) provided in a region below said portion (35).

12. The device (1) according to claims 2 and 3, or claims 3 and 8, or claim 9, or claims 10 to 11 when dependent on claim 9, **characterized in that** said third external adapter (33a) is provided with an eighth hole (45), which is axially offset with respect to the intersection point of the heights, and is arranged either in axial alignment with a first of said circles (106c) on said second side of the bicycle frame or in axial alignment with a second of said circles (106d) on said second side of the bicycle frame, said first and second circles of said first and second sides of the bicycle frame (106a, 106b and 106c, 106d) being respectively axially aligned with each other, so that once the positioning of said first external adapter (10) and of said second internal adapter (10b) has been defined, said third external adapter (33a) also is positioned so that said pivot (100) of said wheel is axially aligned either with said first circles (106a, 106c) or with said second circles (106b, 106d).

## Patentansprüche

1. Eine Vorrichtung (1) zur selektiven Positionierung des Drehpunkts (100) eines Rades eines Fahrrads, das einen Rahmen umfasst, der aus Folgendem besteht: einem hinteren Ständer (2), ausgestattet mit einem ersten Paar erster schräger Hinterradgabeln (3a, 3b), welche jeweils über eine dreieckige Halterung (5a, 5b) mit einem zweiten Paar zweiter horizontaler Hinterradgabeln (4a, 4b) verbunden sind; wobei ein Kettenschaltungshaken (14) mit einer der ersten Hinterradgabeln (3a) und einer der zweiten Hinterradgabeln (4a) auf einer ersten Seite des Fahrradrahmens verbindbar ist; wobei erste, externe Sitze (8) und zweite, interne Sitze (9) an der ersten inneren Oberfläche (7b) und an der ersten äußeren Oberfläche (7a) der dreieckigen Halterung (5a) auf der ersten Seite des Rahmens angebracht sind, zum Zwecke der axialen und lösbaren Positionierung eines ersten, äußeren Adapters (10a) und eines zweiten, inneren Adapters (10b), wobei der erste, äußere Adapter (10a) und der zweite, innere Adapter (10b) ein zweites Loch (12) beziehungsweise ein drittes Loch (23) haben, die beide glatt und ausgebildet sind, um zwei verschiedene axiale Anordnungen des Kettenschaltungshakens (14) und folglich des Drehpunkts (100) des Rades mit Bezug auf die beiden ersten und zweiten Hinterradgabeln (3a, 4a) zu bestimmen;
**dadurch gekennzeichnet, dass** die Vorrichtung ausgebildet ist, um den Kettenschaltungshaken (14) im Uhrzeigersinn drehend blockiert und entgegen dem Uhrzeigersinn nur in einem gewählten Bogen frei zur Drehung zu halten.

2. Die Vorrichtung (1) gemäß Anspruch 1, **dadurch gekennzeichnet, dass** die eine der zweiten Hinterradgabeln (4b) auf einer zweiten Seite des Fahrradrahmens gegenüber der ersten Seite (4b) über eine entsprechende dreieckige Halterung (5b) an einer zweiten inneren Oberfläche (30b) und an einer zweiten äußeren Oberfläche (30a) angeschlossen ist, von der es dritte, externe Sitze (31) und vierte, interne Sitze (32) gibt für die lösbare Positionierung eines dritten, äußeren Adapters (33b) und eines vierten, inneren Adapters (33a), die ausgebildet sind, um zwei verschiedene axiale Anordnungen des Rades mit Bezug auf die zwei ersten und zweiten Hinterradgabeln (3a, 3b, 4a, 4b) zu bestimmen.

3. Die Vorrichtung (1) gemäß einem oder mehreren der obigen Ansprüche, **dadurch gekennzeichnet, dass** die ersten und zweiten Hinterradgabeln oder Öffnungen (3a, 3b, 4a, 4b) am Scheitelpunkt der dreieckigen Halterungen (5a, 5b) ein erstes Loch (6a, 6b) haben, das die Form einer Acht hat, wobei das erste Loch (6a, 6b) zwei Kreise (106a, 106b, 106c, 106d) bildet, die aneinander angrenzen, identisch sind und sich teilweise schneiden und die beide glatte Innenflächen haben, welche wiederum zwei verschiedene Zustände für die Anordnung des Kettenschaltungshakens (14) und des Drehpunkts (100) des Rades bestimmen.

4. Die Vorrichtung (1) gemäß Anspruch 3, **dadurch gekennzeichnet, dass** der erste, äußere Adapter (10a) einen ersten Kopf (11a) mit im Wesentlichen elliptischem Grundriss hat, versehen mit einem zweiten Loch (12), das kein Gewinde hat und exzentrisch ist und einen Durchmesser hat, der im Wesentlichen gleich demjenigen der Buchse (13) des Kettenschaltungshakens (14) ist, wobei das zweite Loch (12) einen Durchmesser hat, der im Wesentlichen gleich dem Durchmesser eines der Kreise (106a, 106b) auf der ersten Seite des Fahrradrahmens ist; wobei auf der Seite des ersten Kopfs (11a), die derjenigen gegenüberliegt, in welcher das zweite Loch (12) angebracht ist, ein erster Stift (15) vorsteht, welcher daher axial zu dem zweiten Loch (12) versetzt ist und so geformt ist, dass er wahlweise nach einer Drehung des ersten, äußeren Adapters (10a) um 180° in einen der zwei Kreise (106a, 106b) auf der ersten Seite des Fahrradrahmens eingeführt werden kann, um zwei mögliche Konfigurationen zu bestimmen, in denen es möglich ist, zwei verschiedene axiale Anordnungen des Drehpunkts (100) des Rades im Verhältnis zu der Halterung (5a) der ersten Hinterradgabel (3a) auf der ersten Seite des Fahrradrahmens zu bestimmen.

5. Die Vorrichtung (1) gemäß einem oder mehreren der obigen Ansprüche, **dadurch gekennzeichnet, dass** der zweite, interne Sitz (9) eine im Wesentlichen schiefe Trapezform mit einer längeren parallelen Seite (24) hat, die der Form der unteren Seite der Halterung (5a) auf der ersten Seite des Fahrradrahmens folgt, einer kürzeren parallelen Seite (25), die, vom Scheitelpunkt der Halterung (5a) auf der ersten Seite des Fahrradrahmens zu der zweiten Hinterradgabel (4a) auf der ersten Seite des Fahrradrahmens, eine bestimmte Neigung zur darunter liegenden längeren parallelen Seite (24) hat, und eine schräge Seite (26) zur Verbindung zwischen der längeren parallelen Seite (24) und der kürzeren parallelen Seite (25), die der Richtung der zweiten Hinterradgabel (4a) auf der ersten Seite des Fahrradrahmens zugewandt ist.

6. Die Vorrichtung (1) gemäß einem oder mehreren der Ansprüche 3 bis 4 und 5,
**dadurch gekennzeichnet, dass** der zweite, innere Adapter (10b) aus einer Platte (22) besteht, die komplementär zu dem zweiten, internen Sitz (9) geformt ist, eine im Wesentlichen flache Form hat und mit dem dritten Loch (23) versehen ist, das kein Gewinde hat und exzentrisch ist und einen Durchmesser hat, der im Wesentlichen gleich dem Durchmesser der Buchse (13) und dem Durchmesser eines der Kreise (106a, 106b) auf der ersten Seite des Fahrradrahmens ist;
wobei ein erhöhter Abschnitt (27), geformt wie ein Parallelepiped, von der Platte (22) parallel zu der schrägen Seite (26) und so vorsteht, dass er die kürzere parallele Seite (25) teilweise betrifft; wobei wiederum ein Stift (28) von dem erhöhten Abschnitt vorsteht, im Wesentlichen angrenzend an die Verbindung zwischen der schrägen Seite (26) und der kürzeren parallelen Seite (25), wobei der Stift ausgebildet ist, um den Kettenschaltungshaken (14), nach der Montage, in Richtung einer Drehung im Uhrzeigersinn blockiert und entgegen dem Uhrzeigersinn nur in einem gewählten Bogen frei zur Drehung zu halten.

7. Die Vorrichtung (1) gemäß Anspruch 6,
**dadurch gekennzeichnet, dass** bei einer Drehung des ersten, äußeren Adapters (10a) um 180° der zweite, innere Adapter (10b) anders im Verhältnis zu dem ersten, internen Sitz (9) angeordnet wird und der Stift (28) sich gleichzeitig sowohl axial als auch radial zu dem ersten Loch (6a) auf der ersten Seite des Fahrradrahmens bewegt, um einen präzisen Abstand von der Achse des Drehpunkts (100) des Rades einzuhalten und bei einer Drehung gegen den Uhrzeigersinn das Anliegen eines vorderen Arms (29) des Kettenschaltungshakens (14) daran zu ermöglichen.

8. Die Vorrichtung (1) gemäß Anspruch 2, **dadurch gekennzeichnet, dass** sich an der zweiten äußeren Oberfläche (30a) und an der zweiten inneren Oberfläche (30b) der Halterung (5b) auf der zweiten Seite des Fahrradrahmens, verbunden mit den ersten und zweiten Hinterradgabeln (3b, 4b) auf der zweiten Seite des Fahrradrahmens, der dritte, externe Sitz (31) und der vierte, interne Sitz (32) für die axiale und lösbare Positionierung des dritten, äußeren Adapters (33a) beziehungsweise des vierten, inneren Adapters (33b) befinden, wobei der vierte, innere Adapter (33b) im Wesentlichen C-förmig ist, um im äußeren Umfangsbereich für den Anschluss von Flügeln (34a, 34b) einen im Wesentlichen flachen Abschnitt (35) zu bilden, welcher in Richtung der zweiten Hinterradgabel (4b) auf der zweiten Seite des Fahrradrahmens durch einen Zahn (36) verbunden ist, der zu der ersten Hinterradgabel (3b) auf der zweiten Seite des Fahrradrahmens vorsteht,
wobei der vierte, interne Sitz (32) in seinem Inneren den vierten, inneren Adapter (33b) aufnimmt und in Richtung der ersten Hinterradgabel (3b) auf der zweiten Seite des Fahrradrahmens
einen fünften Sitz (38) hat, welcher ausgebildet ist, um den komplementär geformten Zahn (36) vorübergehend aufzunehmen, wobei sich angrenzend an den fünften Sitz (38) ein sechster Sitz (39) befindet, der diesem ähnlich und ausgebildet ist, um die selektive Positionierung des Zahns (36) zu ermöglichen, die den vierten inneren Adapter (33b) eine Translationsbewegung in Richtung der zweiten Hinterradgabel (4b) auf der zweiten Seite des Fahrradrahmens durchführen lässt.

9. Die Vorrichtung (1) gemäß den Ansprüchen 2, 3 und 8, **dadurch gekennzeichnet, dass** ein Zwischenraum zwischen den Flügeln (34a, 34b) des vierten, inneren Adapters (33b) geformt ist und es ermöglicht, unabhängig von der Position, die der vierte, innere Adapter (33b) einnimmt, eine Blockade des ersten Lochs (6b) auf der zweiten Seite des Fahrradrahmens zu verhindern;
der ebenfalls die Form einer Acht hat und so zwei aneinander angrenzende und sich teilweise schneidende Kreise (106c, 106d) bildet, die identisch sind und beide glatte Innenflächen haben, welche wiederum zwei verschiedene Zustände für die Positionierung des Drehpunkts (100) bestimmen.

10. Die Vorrichtung (1) gemäß Anspruch 2 und 8 oder Anspruch 9, **dadurch gekennzeichnet, dass** der dritte Adapter (33a) eine Dreieckform mit gerundeten Ecken hat und herausnehmbar in den dritten, externen Sitz (31) eingesetzt werden kann, wobei ein Scheitelpunkt des dritten Adapters (33a) der ersten Hinterradgabel (3b) auf der zweiten Seite des Fahrradrahmens zugewandt ist,
wobei ein viertes Loch (40) darin angebracht ist und eine Schraube (41) aufnimmt, zum Zwecke seines vorübergehenden Einsetzens in ein fünftes Durchgangsloch (42) ohne Gewinde, das in dem vierten, internen Sitz (32) in einem Bereich unterhalb des fünften Sitzes (38) für den Zahn (36) angebracht ist; wobei die Schraube (41) in ein sechstes Loch (43) mit Komplementärgewinde eingeschraubt wird, das in dem vierten, inneren Adapter (33b) in einem Bereich angebracht ist, der unterhalb des fünften Sitzes (38) liegt, wenn der Zahn (36) in den fünften Sitz (38) eingeführt ist.

11. Die Vorrichtung (1) gemäß Anspruch 10, **dadurch gekennzeichnet, dass** eine Bewegung des vierten, inneren Adapters (33b), so dass der Zahn (36) in dem sechsten Sitz (39) angeordnet wird, die gleichzeitige Bewegung auch des sechsten Lochs (43) auslöst; wobei die Schraube (41) folglich in einem siebten Loch (44) mit Komplementärgewinde befestigt wird, das in einem Bereich unterhalb des Abschnitts (35) angebracht ist.

12. Die Vorrichtung (1) gemäß Anspruch 2 und 3 oder Anspruch 3 und 8 oder Anspruch 9 oder Anspruch 10 bis 11, wenn abhängig von Anspruch 9,
**dadurch gekennzeichnet, dass** der dritte, äußere Adapter (33a) mit einem achten Loch (45) versehen ist, welches axial zum Schnittpunkt der Höhen versetzt und entweder axial fluchtend mit einem ersten der Kreise (106c) auf der zweiten Seite des Fahrradrahmens oder axial fluchtend mit einem zweiten der Kreise (106d) auf der zweiten Seite des Fahrradrahmens angeordnet ist, wobei die ersten und zweiten Kreise der ersten und zweiten Seiten des Fahrradrahmens (106a, 106b und 106c, 106d) entsprechend axial miteinander fluchten,
so dass, sobald die Positionierung des ersten, äußeren Adapters (10) und des zweiten, inneren Adapters (10b) bestimmt wurde, auch der dritte, äußere Adapter (33a) so positioniert ist, dass der Drehpunkt (100) des Rades axial entweder mit den ersten Kreisen (106a, 106c) oder mit den zweiten Kreisen (106b, 106d) fluchtet.

## Revendications

1. Dispositif (1) pour le positionnement sélectif de l'axe (100) d'une roue d'une bicyclette comprenant un cadre composé d'un triangle arrière (2) pourvu d'une première paire de premiers haubans obliques (3a, 3b) qui sont reliés chacun, respectivement au moyen d'un support triangulaire (5a, 5b), à une deuxième paire de deuxièmes bases horizontales (4a, 4b), une patte de dérailleur (14) pouvant être associée à l'un desdits premiers haubans (3a) et l'une desdites deuxièmes bases (4a) sur un premier côté du cadre de bicyclette, dans lequel des premiers sièges extérieurs (8) et des deuxièmes sièges intérieurs (9) sont prévus sur la première surface intérieure (7b) et sur la première surface extérieure (7a) du support triangulaire (5a) sur ledit premier côté du cadre pour le positionnement axial et amovible respectivement d'un premier adaptateur extérieur (10a) et d'un deuxième adaptateur intérieur (10b), dans lequel ledit premier adaptateur extérieur (10a) et ledit deuxième adaptateur intérieur (10b) ont respectivement un deuxième trou (12) et un troisième trou (23), tous deux étant lisses et adaptés pour déterminer deux agencements axiaux différents de ladite patte de dérailleur (14) et par conséquent dudit axe (100) de ladite roue par rapport auxdits deux premiers hauban et base (3a, 4a),
**caractérisé en ce que** ledit dispositif est adapté pour maintenir ladite patte de dérailleur (14) bloquée dans le sens des aiguilles d'une montre et libre de tourner dans le sens inverse des aiguilles d'une montre sur un arc choisi.

2. Dispositif (1) selon la revendication 1, **caractérisé en ce que** la base desdites deuxièmes bases (4b) située sur un deuxième côté du cadre de bicyclette opposé audit premier côté (4b) est connectée par un support triangulaire respectif (5b) sur une deuxième surface intérieure (30b) et sur une deuxième surface extérieure (30a) duquel se trouvent des troisièmes sièges extérieurs (31) et quatrièmes sièges intérieurs (32) pour le positionnement amovible, respectivement, d'un troisième adaptateur extérieur (33b) et d'un quatrième adaptateur intérieur (33a), qui sont adaptés pour déterminer deux agencements axiaux différents de ladite roue par rapport auxdits deux premiers haubans et deuxième bases (3a, 3b, 4a, 4b).

3. Dispositif (1) selon l'une ou plusieurs des revendications précédentes, **caractérisé en ce que** lesdits premiers haubans et deuxième bases ou pattes (3a, 3b, 4a, 4b) ont, au sommet desdits supports triangulaires (5a, 5b), un premier trou (6a, 6b) qui a la forme d'un chiffre huit, ledit premier trou (6a, 6b) formant deux cercles (106a, 106b, 106c, 106d) qui sont contigus, mutuellement identiques et qui se coupent partiellement entre eux et tous deux ont des surfaces intérieures lisses, qui déterminent à leur tour deux états différents pour l'agencement de ladite patte de dérailleur (14) et dudit axe (100) de ladite roue.

4. Dispositif (1) selon la revendication 3, **caractérisé en ce que** ledit premier adaptateur extérieur (10a) a une première tête (11a) ayant une forme en plan substantiellement elliptique, pourvue d'un deuxième trou (12), qui n'est pas fileté et excentrique et qui a un diamètre qui est sensiblement égal à celui du manchon (13) de ladite patte de dérailleur (14), ledit deuxième trou (12) ayant un diamètre qui est sensiblement égal au diamètre de l'un desdits cercles (106a, 106b) sur ledit premier côté du cadre de bicyclette, sur le côté de ladite première tête (11a) qui est opposé à celui sur lequel ledit deuxième trou (12) est formé faisant saillie une première tige (15), qui est par conséquent décalée axialement par rapport audit deuxième trou (12), qui a une forme prévue pour lui permettre d'être insérée sélectivement dans l'un desdits deux cercles (106a, 106b) sur ledit premier côté du cadre de bicyclette après une rotation à 180° dudit premier adaptateur extérieur (10a) afin de définir deux configurations possibles dans lesquelles il est possible de déterminer deux agencements axiaux différents dudit axe (100) de ladite roue par rapport audit support (5a) dudit premier hauban (3a) sur ledit premier côté du cadre de bicyclette.

5. Dispositif (1) selon l'une ou plusieurs des revendications précédentes, **caractérisé en ce que** ledit deuxième siège intérieur (9) a substantiellement la forme d'un trapézoïde scalène avec un côté parallèle long (24) qui suit la forme du côté inférieur dudit support (5a) sur ledit premier côté du cadre de bicyclette, un côté parallèle court (25) qui a, du sommet dudit support (5a) sur ledit premier côté du cadre de bicyclette vers ladite deuxième base (4a) sur ledit premier côté du cadre de bicyclette, une inclinaison donnée vers le côté parallèle long sous-jacent (24), et un côté oblique (26) destiné à être connecté entre ledit côté parallèle long (24) et ledit côté parallèle court (25) qui est orienté dans la direction de ladite deuxième base (4a) sur ledit premier côté du cadre de bicyclette.

6. Dispositif (1) selon l'une ou plusieurs des revendications 3 à 4 et 5, **caractérisé en ce que** ledit deuxième adaptateur intérieur (10b) est constitué par une plaque (22), qui a une forme complémentaire de celle dudit deuxième siège intérieur (9), qui a une forme substantiellement plate et qui est pourvue dudit troisième trou (23), qui n'est pas fileté et est excentrique et qui a un diamètre qui est sensiblement égal au diamètre dudit manchon (13) et au diamètre de l'un desdits cercles (106a, 106b) sur ledit premier côté du cadre de bicyclette, une partie surélevée (27) ayant la forme d'un parallélépipède faisant saillie depuis ladite plaque (22) parallèlement audit côté oblique (26) et de manière à interférer partiellement avec ledit côté parallèle court (25), un ergot (28) faisant saillie à son tour depuis ladite partie surélevée substantiellement adjacente à la connexion entre ledit côté oblique (26) et ledit côté parallèle court (25), ledit ergot étant adapté pour maintenir ladite patte de dérailleur (14), une fois montée, bloquée en rotation dans le sens des aiguilles d'une montre et libre de tourner dans le sens inverse des aiguilles d'une montre, seulement sur un arc choisi.

7. Dispositif (1) selon la revendication 6, **caractérisé en ce que**, lors d'une rotation de 180° dudit premier adaptateur extérieur (10a), ledit deuxième adaptateur intérieur (10b) est disposé différemment par rapport audit premier siège intérieur (9) et en même temps ledit ergot (28) se déplace, à la fois axialement et radialement par rapport audit premier trou (6a) sur ledit premier côté du cadre de bicyclette, afin de maintenir une distance précise depuis l'axe géométrique dudit axe (100) de la roue et de permettre un appui avec celui-ci d'un bras avant (29) de ladite patte de dérailleur (14) lors d'une rotation dans le sens inverse des aiguilles d'une montre.

8. Dispositif (1) selon la revendication 2, **caractérisé en ce que** sur la deuxième surface extérieure (30a) et sur la deuxième surface intérieure (30b) dudit support (5b) sur ledit deuxième côté du cadre de bicyclette, connectés auxdits premier et deuxième hauban et base (3b, 4b) sur ledit deuxième côté du cadre de bicyclette, se trouvent ledit troisième siège extérieur (31) et ledit quatrième siège intérieur (32) pour le positionnement axial et amovible respectivement dudit troisième adaptateur extérieur (33a) et dudit quatrième adaptateur intérieur (33b), ledit quatrième adaptateur intérieur (33b) étant substantiellement en forme de C afin de former, dans la région périphérique extérieure pour la connexion d'ailes (34a, 34b), une partie substantiellement plane (35) qui est connectée, dans la direction de ladite deuxième base (4b) sur ledit deuxième côté du cadre de bicyclette, par une dent (36) qui fait saillie vers ledit premier hauban (3b) sur ledit deuxième côté du cadre de bicyclette,
ledit quatrième siège intérieur (32) recevant ledit quatrième adaptateur intérieur (33b) et comportant, dans la direction dudit premier hauban (3b) sur ledit deuxième côté du cadre de bicyclette, un cinquième siège (38) qui est adapté pour recevoir temporairement ladite dent de forme complémentaire (36), en position adjacente audit cinquième siège (38) se trouvant un sixième siège (39), qui est similaire au précédent et qui est adapté pour permettre le positionnement sélectif de ladite dent (36) qui fait translater ledit quatrième adaptateur intérieur (33b) dans la direction de ladite deuxième base (4b) sur ledit deuxième côté du cadre de bicyclette.

9. Dispositif (1) selon les revendications 2, 3 et 8, **caractérisé en ce qu'**un espace est formé entre lesdites ailes (34a, 34b) dudit quatrième adaptateur intérieur (33b) qui permet, quelle que soit la position prise par ledit quatrième adaptateur intérieur (33b), d'éviter d'obstruer ledit premier trou (6b) sur ledit deuxième côté du cadre de bicyclette, qui a aussi la forme d'un chiffre huit afin de former deux cercles contigus et qui se coupent partiellement (106c, 106d), qui sont mutuellement identiques et qui ont tous deux des surfaces intérieures lisses, qui déterminent à leur tour deux états différents pour le positionnement dudit axe (100).

10. Dispositif (1) selon les revendications 2 et 8, ou 9, **caractérisé en ce que** ledit troisième adaptateur (33a) a une forme triangulaire avec des angles arrondis et peut être inséré de manière détachable dans ledit troisième siège extérieur (31), un sommet dudit troisième adaptateur (33a) étant dirigé vers ledit premier hauban (3b) sur ledit deuxième côté du cadre de bicyclette, un quatrième trou (40) étant prévu sur celui-ci et recevant une vis (41) pour son insertion temporaire au niveau d'un cinquième trou débouchant non fileté (42) prévu dans ladite quatrième siège intérieur (32) dans une région située sous ledit cinquième siège (38) pour ladite dent (36), ladite vis (41) étant vissée sur un sixième trou fileté de façon complémentaire (43) prévu dans ledit quatrième adaptateur intérieur (33b) dans une région qui se trouve sous ledit cinquième siège (38) lorsque ladite dent (36) est insérée dans ledit cinquième siège (38).

11. Dispositif (1) selon la revendication 10, **caractérisé en ce qu'**un déplacement dudit quatrième adaptateur intérieur (33b) de telle manière que ladite dent (36) est placée dans ledit sixième siège (39) provoque le déplacement simultané dudit sixième trou (43), ladite vis (41) étant fixée par conséquent dans un septième trou fileté complémentaire (44) prévu dans une région située sous ladite partie (35).

12. Dispositif (1) selon les revendications 2 et 3, ou 3 et 8, ou 9, ou 10 à 11 lorsqu'elles dépendent de la revendication 9, **caractérisé en ce que** ledit troisième adaptateur extérieur (33a) est pourvu d'un huitième trou (45), qui est décalé axialement par rapport au point d'intersection des hauteurs, et qui est agencé soit en alignement axial avec un premier desdits cercles (106c) sur ledit deuxième côté du cadre de bicyclette, soit en alignement axial avec un deuxième desdits cercles (106d) sur ledit deuxième côté du cadre de bicyclette, lesdits premier et deuxième cercles desdits premier et deuxième côtés du cadre de bicyclette (106a, 106b et 106c, 106d) étant respectivement alignés axialement entre eux, de sorte qu'une fois que le positionnement dudit premier adaptateur extérieur (10) et dudit deuxième adaptateur intérieur (10b) a été défini, ledit troisième adaptateur extérieur (33a) est aussi positionné de sorte que ledit axe (100) de ladite roue est axialement aligné soit avec lesdits premiers cercles (106a, 106c), soit avec lesdits deuxièmes cercles (106b, 106d).
